# EUROPEAN PATENT SPECIFICATION

(11) **EP 3 614 651 B1**
(45) Date of publication and mention of the grant of the patent: **06.01.2021**
(21) Application number: 18782290.3
(22) Date of filing: 11.07.2018
(51) Int. Cl.: H04M 1/18, H04M 1/02, H04N 5/225, H04M 1/21

(54) **PHOTOGRAPHING APPARATUS PROTECTION CASE HAVING DETACHABLE EXTERNAL CAMERA LENS**
FOTOGRAFIEVORRICHTUNGSSCHUTZGEHÄUSE MIT ABNEHMBARER EXTERNER KAMERALINSE
BOÎTIER DE PROTECTION D'APPAREIL PHOTOGRAPHIQUE AYANT UN OBJECTIF EXTERNE DÉTACHABLE

(30) Priority: 27.06.2018 CN 201810680830
(43) Date of publication of application: 26.02.2020
(73) Proprietor: Guangdong Sirui Optical Co., Ltd, Zhongshan, Guangdong 528458 (CN)
(72) Inventor: LI, Jie, Zhongshan Guangdong 528458 (CN); HUANG, Xiangyu, Zhongshan Guangdong 528458 (CN)
(74) Representative: Lavoix
(86) International application number: PCT/CN2018/095240
(87) International publication number: WO 2020/000509

(56) References cited:
- WO-A1-2013/151255
- CN-A- 107 024 823
- CN-U- 205 160 597
- CN-U- 206 164 645
- CN-U- 206 164 645
- CN-U- 206 364 871
- CN-U- 206 962 868
- US-A1- 2013 177 304

## Description

### TECHNICAL FIELD

The present invention relates to the technical field of mobile phone accessories, and particularly to a protective shell for a mobile phone with a detachable external camera lens.

### BACKGROUND

When first coming into the world, mobile phones are merely used as a portable phone terminal in a wide range. With the advance in science and technology and the development of economy, the mobile phone has become even more powerful in functions, making it a necessity in people's life. At present, the mobile phone falls into two categories, intelligent ones and unintelligent ones, between which the former has a larger market share due to its high main frequency and operation speed, and fast processing of program tasks, which result in convenient daily use. The intelligent mobile phone generally refers to those mobile phones which, just like a personal computer, have an independent operating system and independent running space, allowing a user to install software, games, navigation and other applications of a third-party service provider, and are capable of realizing access to a wireless network via a mobile communication network.

The intelligent mobile phone is featured by a most basic function, photographing. Nowadays, the mobile phone enjoys an increasingly powerful photographing function with much higher pixels, gradually replacing a conventional household camera as a preferred photography tool. However, limited by its size and weight, the photo-taking function integrated on the mobile phone is designed to be nothing more than simple photographing. But the traditional mobile phone prime lens is not enough to satisfy the public pursuit of a higher life quality, ushering in the emergence of an external camera lens for the mobile phone, whereby people can choose a special lens he needs at his will as required during the photographing, and generally a special lens includes 2X zoom lenses, 4X zoom lenses, macro photography lenses, fisheye lenses, wide angle lenses and the like.

Presently, there are many approaches for fixing a mobile phone external camera lens on the mobile phone, mostly adopting a rotary positioning structure by positioning the external camera lens rotatablely on the mobile phone shell. But the approach has a sophisticated positioning structure, which results in high production cost and deteriorates the consumer's experience, and to make it worse, frequent damages to the lens rotary positioning structure makes it impossible to precisely position the external camera lens and a built-in camera of the mobile phone, and the entire external camera lens equipment is unable to function properly, rendering waste of resources.

For example, Chinese patent document CN204465641U discloses a mobile phone shell with a multi-lens rotating disk, wherein the mobile phone shell is provided with a rotating disk which is provided with several lenses, thereby realizing the operation of lens switching by rotating the rotating disk when the mobile phone shell is in use. The rotating disk is connected on the mobile phone shell in the following way: the face of the rotating disk near the body of the mobile phone shell is provided with an irregular groove, the edge of which is provided with a group of arc grooves, the number and position of the arc grooves correspond to those of the optical lens. And a telescopic positioning rod is fixedly provided on a fixing hole on the face of the rotating disk near the body of the mobile phone shell, the telescopic rod has a length smaller than that of the shell, and a spring is arranged between the bottom of the telescopic rod and the inner surface of the shell bottom.

Regarding the aforementioned patent, however, when the rotating disk rotates, the body of the telescopic positioning rod remains static while being subjected to a rotation torque generated during rotation of the rotating disk. As a result, the telescopic positioning rod usually begins to loosen up after a certain time, resulting in unsmooth rotation and unavailability to conduct positioning.

Document US 2013/177304 discloses an accessory case for a portable electronic device (PED) which includes an interchangeable camera lens system comprising one or more camera lenses.

Document CN 206 164 645 discloses a cell-phone shell with adjustable camera lens.

Document WO 2013/151255 discloses a cellular telephone housing having a movable lenticular body rotated at the rear surface of the cellular telephone housing, the lenticular body comprising a dioptric correction lens, an ultra-wide angle lens and a wide angle lens, thereby enabling use the required lens by positioning the required lens so that it matches the cell phone lens.

### SUMMARY

Therefore, the technical problem solved by the present invention is to overcome the drawbacks in the prior art, i.e., in the presence of an external camera lens for a mobile phone, the mobile phone has a complex positioning structure, resulting in its vulnerability to damage, and exerting a negative effect on the serving life of the external camera lens, by providing a protective shell for a mobile phone with a detachable external camera lens with a simple structure and a long serving life.

To address the aforementioned technical problem, a protective shell for a mobile phone according to claim 1 is provided.

Preferred embodiments of the invention are the subject of the dependent claims, whose content is to be understood as forming part of the present description.

### BRIEF DESCRIPTION OF THE DRAWINGS

In order to make a clearer description of technical solutions in specific implementations of the present invention or in prior art, figures involved in description for the specific implementations or the prior art will be briefly introduced, and obviously, the figures in the following description illustrate some implementations of the present invention, for one with ordinary skill in the art, other figures can also be obtained in accordance with these figures and within the scope of the appended claims without delivering creative efforts.
FIG. 1 is an exploded view of a protective shell for a mobile phone with a detachable external camera lens of the present invention;
FIG. 2 is a front view of a protective shell for a mobile phone with a detachable external camera lens of the present invention;
FIG. 3 is a sectional view of FIG. 2 along A-A;

Demonstration for reference numbers:

11- soft shell silicone; 111- first position hole; 112- strip- shaped hole; 12-hard shell silicone; 121- second position hole; 122- chute; 123- groove; 124-first limit groove; 125-second limit groove; 21- lens mount; 211- first stepped hole; 211a- step; 22- first elastic member; 23- lens mount axle; 231- flange; 232-blind hole; 24-lens cap; 241-second stepped hole; 3-slider; 31- limit bulge; 32-slider through- hole; 33- positioning bulge; 34- ball bearing; 35- spring.

### DETAILED DESCRIPTION

Reference will be made to accompanying figures to make a clear and complete description as below of technical solutions of the present invention.

In the description of the present invention, it should be noted that, orientation or position relationships indicated by terms such as "centre", "upper", "lower", "left", "right", "vertical", "horizontal", "inner", "outer", etc. are orientation or position relationships indicated on the basis of the accompanying figures, are only intended to facilitate description or simplified description of the present invention, rather than indicating or suggesting that the involved apparatus or element shall have specific orientations, or be configured and operated in a specific manner, and therefore shall not be construed as limitations to the present invention. In addition, terms such as "first", "second", "third", which are merely intended for description, can not be construed as indicating or suggesting relative importance.

In the description of the present invention, it should be noted that, unless otherwise specified and defined, terms such as "mounting", "interconnected", "connected" shall be construed in a broad sense, for example, fixedly connected, removably connected, integrally connected, mechanically connected, electrically connected, directly connected, indirectly connected via intermediate medium, or further, internally communicated between two elements. Case-by-case interpretation can be made to the above terms in the present invention by one with ordinary skill in the art.

Embodiment 1

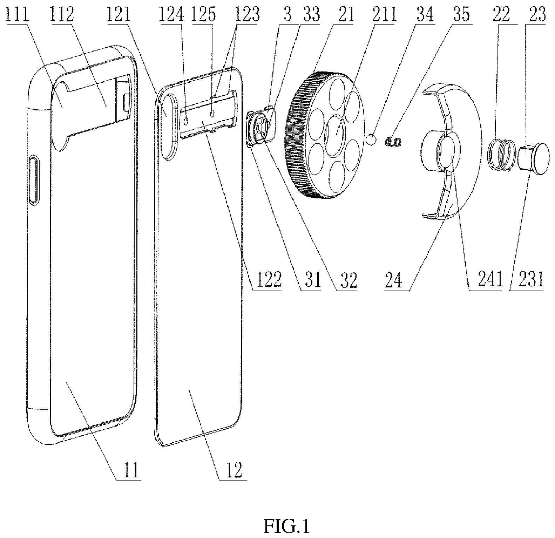

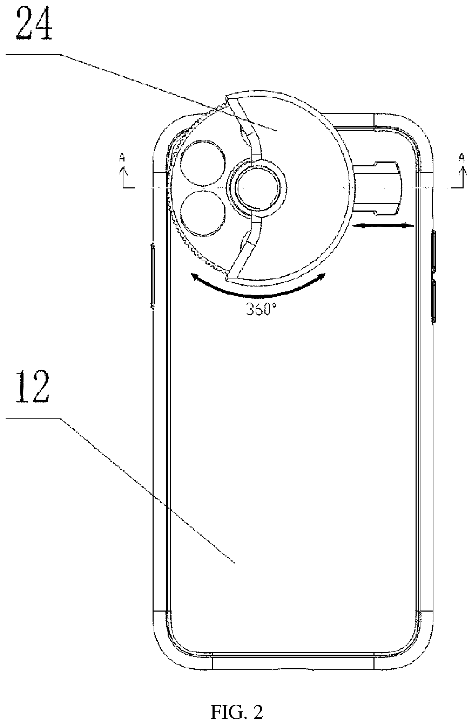

As shown in FIGs.1-3, a protective shell for a mobile phone with a detachable external camera lens of the present invention includes a housing body formed with a position hole for a built-in camera of the mobile phone, and further includes an external camera lens assembly, the external camera lens assembly includes:

a lens mount 21, provided thereon with a first stepped hole 211, and several optical lenses surrounding the first stepped hole 211;

a pivoted positioning element, provided with a first detachment prevention structure and a second detachment prevention structure respectively at both ends, with a rotary positioning portion in the middle, wherein, the rotary positioning portion is located in the first stepped hole 211, the first detachment prevention structure and the second detachment prevention structure are respectively located at both ends of the first stepped hole 211, for limiting the lens mount 21 on the rotary positioning portion, and the second detachment prevention structure is connected with the housing body;

a first elastic member 22, arranged between the first detachment prevention structure and a step of the first stepped hole 211, with a bias pressure applied on the lens mount 21;

a first positioning structure, including a first positioning portion and several first positioning and fitting portions, which are arranged on both the lens mount 21 and the housing body, or on both the lens mount 21 and the second detachment prevention structure, wherein, when under the action of an external force the lens mount 21 moves away from the housing body in the axial direction of the pivoted positioning element, the first positioning portion is detached from the corresponding first positioning and fitting portion against the elastic force of the first elastic member 22, and the lens mount 21 is able to rotate relative to the housing body under the external force; when the lens mount 21 rotates to a point where the selected optical lens is aligned with a position hole for the built-in camera and the external force disappears, the lens mount 21 enables the first positioning portion to be aligned and attached with the corresponding first positioning and fitting portion under the elastic force of the first elastic member 22, thereby limiting the lens mount 21 on the housing body.

The aforementioned solution is a core solution of the present invention, wherein the lens mount 21 is positioned on the pivoted positioning element to be connected with the housing body, and the first elastic member 22 is arranged in an axial direction of the pivoted positioning element, making it necessary for the lens mount 21 to overcome the static friction force between the first positioning portion and the first positioning and fitting portion as well as the bias pressure of the first elastic member 22 alone when rotating centring around the pivoted positioning element, so as to avoid generating a rotation torque to the first elastic element and damages to the first elastic member caused by the rotation torque, leading to smoother rotation of the lens mount 21. Therefore, the protective shell adopted by the mobile phone with an external camera lens of the present invention has a greatly expanded serving life and a simple structure, which in turn results in reduction in production cost, and improvement in the market share.

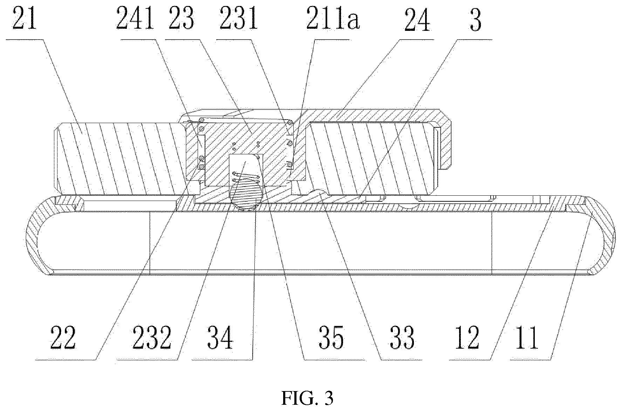

In the present invention, the pivoted positioning element includes three portions, i.e., the rotary positioning portion rotates centring around the limit lens mount, and the first detachment prevention structure and second detachment prevention structure respectively located at the upper and lower ends of the rotary positioning portion, the first detachment prevention structure and the second detachment prevention structure are intended to prevent separation of the lens mount from the rotary positioning portion. Specifically, the pivoted positioning element in this embodiment adopts the lens mount axle 23, wherein a first end of the lens mount axle 23 is provided with a flange 231 as the first detachment prevention structure, and with the rotary positioning portion at the middle. An axle seat is arranged on the upper end surface of the second detachment prevention structure for placing a second end of the lens mount axle 23 therein for position limitation, and a screw is adopted for fixedly connecting the second detachment prevention structure with the lens mount axle 23. The axle seat on the second detachment prevention structure is adjusted along its vertical length and the length of the lens mount axle 23 as practically needed. In this embodiment, referring to FIG. 3, the length of the lens mount axle 23 is greater than that of the axle seat, facilitating subsequent mounting of a second positioning portion. In this embodiment, the pivoted positioning element has a simple structure and is convenient to mount. As a variant of the implementation, the pivoted positioning element may also be formed from a screw, with its nut serving as the first detachment prevention structure, and its bolt as the rotary positioning portion, and the second detachment prevention structure may be connected via a thread.

In the present invention, the second detachment prevention structure may adopt a strip-shaped plate, a circular plate or a special-shaped plate with a size greater than the diameter of the first stepped hole 211 in the lens mount 21, and the plate is provided with a connection structure to connect with the lens mount axle 23.

In the present invention, the first positioning portion is a positioning bulge 33 arranged on the second detachment prevention structure, the first positioning and fitting portion is a positioning hole arranged on the lens mount 21, and the positioning hole is a blind hole. When under the action of an external force the lens mount 21 moves away from the housing body in the axial direction of the lens mount axle 23, the positioning bulge 33 is detached from the corresponding positioning hole against the elastic force of the first elastic member 22, and the lens mount 21 is able to rotate relative to the housing body and the lens mount axle 23 under the external force; when the lens mount 21 rotates to a point where the selected optical lens is aligned with a position hole for the built-in camera and the external force disappears, the lens mount 21 enables the positioning bulge 33 to be aligned and attached with the corresponding positioning hole under the elastic force of the first elastic member 22, namely, the positioning bulge 33 slides into the positioning hole and limits the lens mount 21 on the housing body. Moreover, in this embodiment, the lens mount 21 is provided with three groups of optical lenses, accordingly, three positioning holes are provided on the lens mount 21, respectively for positioning the position of the three groups of optical lenses relative to the built-in camera of the mobile phone. Referring to FIG. 1, it can be seen that this embodiment includes three groups of optical lenses, each group respectively comprising two independent optical lenses.

In the present invention, the external camera assembly is additionally provided with a lens cap 24, the lens cap 24 is provided with a second stepped hole 241 which extends toward the inside of the lens cap 24 and which is placed in the first stepped hole 211 of the lens mount 21 for preventing detachment and limiting position thereof, the rotary positioning portion of the lens mount axle 23 is located in the second stepped hole 241, the first elastic member 22 is arranged between the first detachment prevention structure and a step 211a of the second stepped hole 241. The lens cap 24 is added for protecting the optical lens in the lens mount 23 in a non-use state. As to the positioning of the lens cap 24, a second stepped hole 241 extending inwardly is arranged at the centre of the lens cap 24, and is placed in the first stepped hole 211 of the lens mount 21 for position limitation, while the first elastic member 22 is placed between the second stepped hole 241 and the first detachment prevention structure of the pivoted positioning element, in such a way the lens mount is 21 fixedly positioned on the pivoted positioning element, and the mounting structure is simple and not likely to be damaged. As a variant of the embodiment, the first elastic member 22 of the present invention may adopt a large-sized reset pressure spring which is directly sleeved on the lens mount axle 23, or multi-group small-sized reset springs which are uniformly distributed around the lens mount 23.

In the present invention, the external camera lens assembly is also connected to the housing body in a detachable manner. Specifically, the structure is configured as follows: firstly the second detachment prevention structure is arranged to be a slider 3 of a generally regular strip shape with four limit bulges 31 distributed on its upper and lower edges; the housing body is provided with a chute 122, both sides of which are provided with a guide rail, the chute 122 is strip-shaped with four grooves 123 matched with the limit bulges 31 in shape provided on its upper and lower edges; the slider 3 is able to enter or exit from the chute 122 through one end thereof, and move along the guide rail back and forth. The upper end surface of the slider 3 is provided with an axle seat for a lens mount axle 23 to be located therein for position limitation, and the axle seat is internally provided with four screw mounting holes, a first end of the lens mount axle 23 is accordingly provided with four threaded holes, and the two are fixedly connected via screws. The first end of the lens mount axle 23 is provided with a blind hole 232 in the axial direction, the slider 3 is accordingly provided with a slider through-hole 32, and the blind hole 232 is communicated with the slider through-hole 32 to form a mounting groove; a spring 35 is arranged in the mounting groove as a second elastic member, a ball bearing 34 is installed at the end of the spring 35 as a second positioning portion, accordingly, two limit grooves are arranged at the bottom of the chute 122 as the second fitting and positioning portion, wherein the first limit groove 124 is used for position limitation when the external camera lens assembly is in a photographing position, and the second limit groove 125 is used for position limitation when the external camera assembly is in a non-photographing position. Moreover, the diameter of the slider through-hole 32 is smaller than that of the ball bearing 34, for preventing the ball bearing 34 from exiting the slider through-hole 32. As a variant of the embodiment, the ball bearing 34 may also be replaced with a spring pin, or a hemispherical bulge; and the spring 35 may also adopt multi-group small-sized pressure springs which are disposed in the mounting groove in combination.

In the present invention, the housing body has a hybrid structure, including soft shell silicone 11 suitable for wrapping the frame of the mobile phone and hard shell silicone 12 suitable for positioning the external camera lens assembly, and the two are positioned via adhesion. The soft shell silicone 11 is formed with a first position hole 111, the hard shell silicone 12 is formed with a second position hole 121, the position hole of the built-in camera consists of the first position hole 111 and the second position hole 121 which are overlapped, and the chute 122 is formed on the hard shell silicone 12. The soft shell silicone 11, at a position corresponding to the chute 122, is further provided with a strip-shaped hole 112 in communication with the first position hole 111.

In the present invention, the seat groove of the axle seat on the slider 3 is circular and provided with a positioning flat face along the axis of the seat groove; the lens mount axle 23 is provided in the axial direction with a positioning stage face suitably matched with the positioning flat face in the seat groove. Relative rotation may be hindered between the lens mount axle 23 and the slider 3 by means of the positioning stage face disposed therebetween.

In specific implementation of this embodiment, referring to FIGs. 1-3, in case of requiring connecting the external camera lens with the shell housing body of the mobile phone, the slider 3 is placed on the rightmost end of the chute 122 of the housing body, and the limit bulges 31 on four corners of the slider 3 are aligned with the position of the four grooves 123 on the chute 122, bringing the four limit bulges 31 of the slider into the guide rail at both ends of the chute 122, then the external camera lens is pushed or pulled to the left to limit the slider 3 in the guide rail, at this point, the ball bearing 34 is pressed inwardly against the slider through-hole 32 and fails to extend out, and the spring 35 is intensively compressed in the blind hole 232; the external camera lens is further pushed or pulled to the left, when the ball bearing 34 overlaps with the position of the second limit groove 125, the ball bearing 34 partially extends out of the slider through-hole 32, and drops into the second limit groove 125 to be limited, and the slider 3 is fixed relative to the position of the chute 122, at which point the external camera lens is in a non-photographing position. In case of requiring photography with the external camera lens, a certain push-or-pull force to the left is applied on the external camera lens, the ball bearing 34 escapes the second limit groove 125 under the force and retracts into the through-hole 32 of the slider, the push-or-pull force to the left is proceeded to a point where the ball bearing 34 overlaps with the position of the first limit groove 124, the ball bearing 34 partially extends out of the through-hole 32 of the slider, and drops into the first limit groove 124 to be limited, and the slider 3 is fixed relative to the position of the chute 122, at which point the external camera lens is in a photographing position.

When selecting an optical lens group in demand, the lens mount 21 is subjected to a certain rotary force, the lens mount 21 rotates with the second stepped hole of the lens cap 24 as a rotation centre, the positioning hole on the lens mount 21 is gradually detached with the positioning bulges 33 on the slider 3, and the lens mount 21 drives the lens cap 24 to move away from the housing body along the axis of the lens mount axle 23; the lens mount 21 continues to rotate, until a next positioning hole on the lens mount 21 is aligned with the position of a positioning bulge 33 on the slider 3, the positioning hole is aligned and attached with the positioning bulge 33 under the action of the first elastic member 22, i.e., the reset spring, and so on, so as to realize selection and positioning of an optical lens group.

In this embodiment, the lens cap 24 may rotate, or be fixedly connected with the axle seat on the slider 3 via the step 211a of the second stepped hole.

### Embodiment2

Embodiment 2 differs from embodiment 1 in that the housing body has an integral structure.

## Claims

1. A protective shell for a mobile phone with a detachable external camera lens, the protective shell comprising a housing body formed with a position hole for a built-in camera of the mobile phone, the protective shell further comprising
an external camera lens assembly, and the external camera lens assembly comprises
a lens mount (21), provided thereon with a first stepped hole (211) and several optical lenses surrounding the first stepped hole (211);
a pivoted positioning element, provided with a first detachment prevention structure and a second detachment prevention structure respectively at both ends, with a rotary positioning portion in the middle, wherein, the rotary positioning portion is located in the first stepped hole (211), the first detachment prevention structure and the second detachment prevention structure are respectively located at both ends of the first stepped hole (211), for limiting the lens mount (21) on the rotary positioning portion, and the second detachment prevention structure is connected with the housing body;
a first elastic member (22), arranged between the first detachment prevention structure and a step of the first stepped hole (211), with a bias pressure applied on the lens mount (21); and
a first positioning structure, comprising a first positioning portion and several first positioning and fitting portions, which are arranged on both the lens mount (21) and the housing body, or on both the lens mount (21) and the second detachment prevention structure; wherein, when under the action of an external force the lens mount (21) is adapted to move away from the housing body in the axial direction of the pivoted positioning element, so that the first positioning portion is detached from the corresponding first positioning and fitting portion against the elastic force of the first elastic member (22), and the lens mount (21) is adapted to rotate relative to the housing body under the external force, and when the lens mount (21) rotates to a point where the selected optical lens is aligned with a position hole for the built-in camera and the external force disappears, the lens mount (21) is adapted to enable the first positioning portion to be aligned and attached with the corresponding first positioning and fitting portion under the elastic force of the first elastic member (22), thereby limiting the rotation of lens mount (21) relative to the housing body;
the external camera lens assembly is connected with the housing body in a detachable manner and **characterized in that**
the housing body is provided with a chute (122) with its both sides provided with a guide rail;
the second detachment prevention structure of the pivoted positioning element is adapted to enter or exit from the chute (122) through one end thereof, and move along the guide rail back and forth, and the pivoted positioning element is provided with a mounting groove in the axial direction; and
a second positioning structure, provided on both the second detachment prevention structure and the chute (122), comprises an elastic positioning component limited in the mounting groove, and at least one second fitting and positioning portion arranged at the bottom of the chute (122), the elastic positioning component comprises a second positioning portion and a second elastic member, under the elastic force of the second elastic member the second positioning portion partially extends out of the mounting groove and fits with the corresponding second fitting and
positioning portion, thereby preventing movement of the second detachment prevention structure in the chute.

2. The protective shell for a mobile phone with a detachable external camera lens in accordance with claim 1, **characterized in that**, the external camera lens assembly also comprises a lens cap (24), the lens cap (24) is provided with a second stepped hole (241) which extends toward the inside of the lens cap (24) and is placed in the first stepped hole (211) of the lens mount (21) for preventing detachment and limiting position thereof, the rotary positioning portion is located in the second stepped hole (241), the first elastic member (22) is arranged between the first detachment prevention structure and a step (211a) of the second stepped hole (241).

3. The protective shell for a mobile phone with a detachable external camera lens in accordance with claim 1, **characterized in that**, the first positioning portion is a positioning bulge (33),and the first positioning and fitting portion is a positioning hole suitable to be fitted with the positioning bulge.

4. The protective shell for a mobile phone with a detachable external camera lens in accordance with claim 1, **characterized in that**, the pivoted positioning element comprising:
a slider (3), forming the second detachment prevention structure, adapted to enter or exit from the chute (122) through one end thereof and to move along the guide rail, and provided with slider through-hole (32);
a lens mount axle (23), having a main body forming the rotary positioning portion, a first end fixedly connected with the slider (3) and provided thereon a blind hole (232) which is communicated with the slider through-hole (32) for forming the mounting groove, a second end provided with the flange (231) which forms the first detachment prevention structure.

5. The protective shell for a mobile phone with a detachable external camera lens in accordance with claim 4, **characterized in that**, the second elastic member is a spring (35), the second positioning portion is a ball bearing (34), and the second fitting and positioning portion is a limit groove arranged at the bottom of the chute (122).

6. The protective shell for a mobile phone with a detachable external camera lens in accordance with claim 5, **characterized in that**, there are two limit grooves, comprising a first limit groove (124) for position limitation when the external camera lens assembly is in a photographing position and a second limit groove (125) when the external camera lens assembly is in a non-photographing position.

7. The protective shell for a mobile phone with a detachable external camera lens in accordance with claim 4, **characterized in that**, the first
positioning portion is arranged on the slider (3), and first positioning and fitting portion is arranged on the lens mount (21).

8. The protective shell for a mobile phone with a detachable external camera lens in accordance with claim 4, **characterized in that**, one of the guide rail and the slider (3) is provided with a limit bulge (31) thereon, and the other one is provided with a groove (123) having a shape matched with that of the limit bulge (31), the slider (3) is inserted through the groove (123) via the limit bulge (31), and the limit bulge (31) is adapted to be attached with the guide rail and move along the guide rail.

9. The protective shell for a mobile phone with a detachable external camera lens in accordance with claim 8, **characterized in that**, the slider (3) is strip-shaped with both upper and lower edges provided with the limit bulge (31); the chute (122) is strip-shaped with both upper and lower edges provided with the groove (123) having a shape matched with that of the limit bulge (31).

10. The protective shell for a mobile phone with a detachable external camera lens in accordance with claim 1, **characterized in that**, the housing body has a hybrid structure, comprising soft shell silicone (11) suitable for wrapping the frame of the mobile phone and hard shell silicone (12) suitable for positioning the external camera lens assembly, the soft shell silicone (11) is formed with a first position hole (111), the hard shell silicone (12) is formed with a second position hole (121), the position hole of the built-in camera consists of the first position hole (111) and the second position hole (121) which are overlapped, and the chute (122) is formed on the hard shell silicone (12).

11. The protective shell for a mobile phone with a detachable external camera lens in accordance with claim 10, **characterized in that**, the soft shell silicone (11), at a position corresponding to the chute (122), is further provided with a strip-shaped hole (112) in communication with the first position hole (111).

12. The protective shell for a mobile phone with a detachable external camera lens in accordance with claim 10, **characterized in that**, the soft shell
silicone (11) is connected with the hard shell silicone (12) via adhesion positioning.

13. The protective shell for a mobile phone with a detachable external camera lens in accordance with any one of claims 1-12, **characterized in that**, the housing body has an integral structure.

14. The protective shell for a mobile phone with a detachable external camera lens in accordance with claim 4, **characterized in that**, the slider (3) is provided with an axle seat, and the lens mount axle (23) is placed in a seat groove of the axle seat for position limitation.

15. The protective shell for a mobile phone with a detachable external camera lens in accordance with claim 14, **characterized in that**, the seat groove of the axle seat is circular and provided with a positioning flat face along the axis of the seat groove; the lens mount axle (23) is provided in the axial direction with a positioning stage face suitably matched with the positioning flat face in the seat groove.

## Patentansprüche

1. Schutzhülle für ein Mobiltelefon mit einer abnehmbaren externen Kameralinse, wobei die Schutzhülle einen Gehäusekörper umfasst, der mit einem Positionsloch für eine eingebaute Kamera des Mobiltelefons gebildet ist, wobei die Schutzhülle weiter eine externe Kameralinsenanordnung umfasst und die externe Kameralinsenanordnung Folgendes umfasst:
eine Linsenfassung (21), die darauf mit einer ersten Stufenbohrung (211) bereitgestellt ist, und mehrere optische Linsen, die die erste Stufenbohrung (211) umgeben;
ein schwenkbares Positionierungselement, das mit einer ersten Abnahmeverhinderungsstruktur bzw. einer zweiten Abnahmeverhinderungsstruktur an beiden Enden ausgestattet ist, mit einem drehbaren Positionierungsabschnitt in der Mitte, wobei sich der drehbare Positionierungsabschnitt in der ersten Stufenbohrung (211) befindet, sich die erste Abnahmeverhinderungsstruktur und die zweite Abnahmeverhinderungsstruktur jeweils an beiden Enden der ersten Stufenbohrung (211) befinden, um die Linsenfassung (21) auf dem drehbaren Positionierungsabschnitt zu begrenzen, und die zweite Abnahmeverhinderungsstruktur mit dem Gehäusekörper verbunden ist;
ein erstes elastisches Glied (22), das zwischen der ersten Abnahmeverhinderungsstruktur und einer Stufe der ersten Stufenbohrung (211) angeordnet ist, wobei ein Vorspannungsdruck auf die Linsenfassung (21) angewendet wird; und
eine erste Positionierungstruktur, umfassend einen ersten Positionierungsabschnitt und mehrere erste Positionierungs- und Passabschnitte, die sowohl auf der Linsenfassung (21) als auch auf dem Gehäusekörper oder sowohl auf der Linsenfassung (21) als auch auf der zweiten Abnahmeverhinderungsstruktur angeordnet sind; wobei, wenn unter der Wirkung einer externen Kraft die Linsenfassung (21) ausgelegt ist, um sich weg vom Gehäusekörper in die axiale Richtung des schwenkbaren Positionierungselements zu bewegen, so dass der erste Positionierungsabschnitt vom entsprechenden ersten Positionierungs- und Passabschnitt gegen die elastische Kraft des ersten elastischen Glieds (22) abgenommen wird, und die erste Linsenfassung (21) ausgelegt ist, um sich mit Bezug auf den Gehäusekörper unter der externen Kraft zu drehen, und wenn sich die Linsenfassung (21) an einem Punkt dreht, an dem die ausgewählte optische Linse mit einem Positionsloch für die eingebaute Kamera ausgefluchtet ist und die externe Kraft verschwindet, die Linsenfassung (21) ausgelegt ist, zu ermöglichen, dass der erste Positionirungsabschnitt mit dem entsprechenden ersten Positionierungs- und Passabschnitt unter der elastischen Kraft des ersten elastischen Glieds (22) ausgefluchtet und befestigt ist, wodurch die Drehung der Linsenfassung (21) mit Bezug auf den Gehäusekörper begrenzt wird;
die externe Kameralinsenanordnung mit dem Gehäusekörper auf eine abnehmbare Weise verbunden ist, und **dadurch gekennzeichnet, dass**
der Gehäusekörper mit einer Rinne (122) ausgestattet ist, deren beide Seiten mit einer Führungsschiene ausgestattet sind;
die zweite Abnahmeverhinderungsstruktur des schwenkbaren Positionierungselements ausgelegt ist, um von der Rinne (122) durch ein Ende davon ein- oder auszutreten und sich entlang der Führungsschiene vor- und zurückzubewegen, und das schwenkbare Positionierungselement mit einer Montagenut in der axialen Richtung ausgestattet ist; und
eine zweite Positionierungsstruktur, die sowohl auf der zweiten Abnahmeverhinderungsstruktur als auch der Rinne bereitgestellt ist, eine elastische Positionierungskomponente umfasst, die in der Montagenut begrenzt ist, und mindestens ein zweiter Pass- und Positionierungsabschnitt am Boden der Rinne (122) angeordnet ist, eine elastische Positionierungskomponente einen zweiten Positionierungsabschnitt und ein zweites elastisches Glied umfasst, sich unter der elastischen Kraft des zweiten elastischen Glieds der zweite Positionierungsabschnitt teilweise aus der Montagenut erstreckt und zum entsprechenden zweiten Pass- und Positionierungsabschnitt passt, wodurch die Bewegung der zweiten Abnahmeverhinderungsstruktur in der Rinne verhindert wird.

2. Schutzhülle für ein Mobiltelefon mit einer abnehmbaren externen Kameralinse nach Anspruch 1, **dadurch gekennzeichnet, dass** die externe Kameralinsenanordnung auch eine Linsenkappe (24) umfasst, die Linsenkappe (24) mit einer zweiten Stufenbohrung (241) ausgestattet ist, die sich hin zur Innenseite der Linsenkappe (24) erstreckt und in der ersten Stufenbohrung (211) der Linsenfassung (21) platziert ist, um die Abnahme zu verhindern und die Position davon zu begrenzen, sich der drehbare Positionierungsabschnitt in der ersten Stufenbohrung (241) befindet, das erste elastische Glied (22) zwischen der ersten Abnahmeverhinderungsstruktur und einer Stufe (211a) der zweiten Stufenbohrung (241) befindet.

3. Schutzhülle für ein Mobiltelefon mit einer abnehmbaren externen Kameralinse nach Anspruch 1, **dadurch gekennzeichnet, dass** der erste Positionierungsabschnitt eine Positionierungsausbuchtung (33) ist und der erste Positionierungs- und Passabschnitt ein Positionierungsloch ist, das geeignet ist, um in die Positionierungsausbuchtung zu passen.

4. Schutzhülle für ein Mobiltelefon mit einer abnehmbaren externen Kameralinse nach Anspruch 1, **dadurch gekennzeichnet, dass** das schwenkbare Positionierungselement Folgendes umfasst:
eine Gleitvorrichtung (3), die die zweite Abnahmeverhinderungsstruktur bildet, die ausgelegt ist, um von der Rinne (122) durch ein Ende davon ein- oder auszutreten und sich entlang der Führungsschiene zu bewegen, und ausgestattet mit einem Gleitvorrichtungs-Durchgangsloch (32);
eine Linsenfassungsachse (23), die einen Hauptkörper aufweist, der den drehbaren Positionsabschnitt bildet, ein erstes Ende, das fest mit der Gleitvorrichtung (3) verbunden ist, und darauf bereitgestellt ein blindes Loch (232), das mit dem Gleitvorrichtungs-Durchgangsloch (32) verbunden ist, um die Montagenut zu bilden, ein zweites Ende, das mit dem Flansch (231) ausgestattet ist, das die erste Abnahmeverhinderungsstruktur bildet.

5. Schutzhülle für ein Mobiltelefon mit einer abnehmbaren externen Kameralinse nach Anspruch 4, **dadurch gekennzeichnet, dass** das zweite elastische Element eine Feder (35) ist, wobei der zweite Positionierungsabschnitt ein Kugellager (34) ist und der zweite Pass- und Positionierungsabschnitt eine Begrenzungsnut ist, die am Boden der Rinne (122) angeordnet ist.

6. Schutzhülle für ein Mobiltelefon mit einer abnehmbaren externen Kameralinse nach Anspruch 5, **dadurch gekennzeichnet, dass** zwei Begrenzungsnuten vorhanden sind, umfassend eine erste Begrenzungsnut (124) zur Positionsbegrenzung, wenn sich die externe Kameralinsenanordnung in einer Fotografierposition befindet, und eine zweite Begrenzungsnut (125), wenn sich die externe Kameralinsenanordnung in einer Nicht-Fotografierposition befindet.

7. Schutzhülle für ein Mobiltelefon mit einer abnehmbaren externen Kameralinse nach Anspruch 4, **dadurch gekennzeichnet, dass** die erste Positionierungsposition auf der Gleitvorrichtung (3) angeordnet ist und der erste Positionierungs- und Passabschnitt auf der Linsenfassung (21) angeordnet ist.

8. Schutzhülle für ein Mobiltelefon mit einer abnehmbaren externen Kameralinse nach Anspruch 4, **dadurch gekennzeichnet, dass** eines der Führungsschiene und der Gleitvorrichtung (3) mit einer großen Begrenzungsausbuchtung (31) darauf ausgestattet ist und die andere mit einer Nut (123) ausgestattet ist, die eine Form aufweist, die zu derjenigen der Begrenzungsausbuchtung (31) passt, die Gleitvorrichtung (3) durch die Nut (123) mit Hilfe der Begrenzungsausbuchtung (31) eingeführt ist und die Begrenzugnsausbuchtung (31) ausgelegt ist, um mit der Führungsschiene befestigt zu sein und sich entlang der Führungschiene zu bewegen.

9. Schutzhülle für ein Mobiltelefon mit einer abnehmbaren externen Kameralinse nach Anspruch 8, **dadurch gekennzeichnet, dass** die Gleitvorrichtung (3) streifenförmig ist, wobei sowohl die obere als auch die untere Kante mit der Begrenzugnsausbuchtung (31) ausgestattet ist; die Rinne (122) streifenförmig ist, wobei sowohl die obere als auch die untere Kante mit der Nut (123) ausgestattet ist, die eine Form aufweist, die zu derjenigen der Begrenzungsausbuchtung (31) passt.

10. Schutzhülle für ein Mobiltelefon mit einer abnehmbaren externen Kameralinse nach Anspruch 1, **dadurch gekennzeichnet, dass** der Gehäusekörper eine hybride Struktur aufweist, umfassend ein Weichschalensilikon (11), das geeignet ist, den Rahmen des Mobiltelefons zu umgeben, und ein Hartschalensilikon (12), das geeignet ist, die externe Kameralinsenanordung zu positionieren, wobei das Weichschalensilikon (11) mit einem ersten Positionsloch (111) gebildet ist, das Hartschalensilikon (12) mit einem zweiten Positionsloch (121) gebildet ist, das Positionsloch der eingebauten Kamera aus dem ersten Positionsloch (111) und dem zweiten Positionsloch (121) besteht, die sich überlappen, und die Rinne (122) auf dem Hartschalensilikon (12) gebildet ist.

11. Schutzhülle für ein Mobiltelefon mit einer abnehmbaren externen Kameralinse nach Anspruch 10, **dadurch gekennzeichnet, dass** das Weichschalensilikon (11) an einer Position, die der Rinne entspricht (122), weiter mit einem streifenförmigen Loch (112) in Verbindung mit dem ersten Positionsloch (111) ausgestattet ist.

12. Schutzhülle für ein Mobiltelefon mit einer abnehmbaren externen Kameralinse nach Anspruch 10, **dadurch gekennzeichnet, dass** das Weichschalensilikon (11) mit dem Hartschalensilikon (12) mit Hilfe einer Haftpositionierung verbunden ist.

13. Schutzhülle für ein Mobiltelefon mit einer abnehmbaren externen Kameralinse nach einem der Ansprüche 1 - 12, **dadurch gekennzeichnet, dass** der Gehäusekörper eine einstückige Struktur aufweist.

14. Schutzhülle für ein Mobiltelefon mit einer abnehmbaren externen Kameralinse nach Anspruch 4, **dadurch gekennzeichnet, dass** die Gleitvorrichtung (3) mit einem Achssitz ausgestattet ist und die Linsenfassungsachse (23) in einer Sitznut des Achssitzes zur Positionsbegrenzung positioniert ist.

15. Schutzhülle für ein Mobiltelefon mit einer abnehmbaren externen Kameralinse nach Anspruch 14, **dadurch gekennzeichnet, dass** die Sitznut des Achssitzes kreisförmig und mit einer Positionierungsflachseite entlang der Achse der Sitznut ausgestattet ist; die Linsenfassungsachse (23) in der axialen Richtung mit einer Positionierungsstufenseite ausgestattet ist, die geeignet an die Positioneierungsflachseite in der Sitznut angepasst ist.

## Revendications

1. Coque de protection destinée à un téléphone mobile à objectif d'appareil photo externe détachable, la coque de protection comprenant un corps de logement formé avec un orifice de position destiné à un appareil photo intégré du téléphone mobile, la coque de protection comprenant en outre un ensemble d'objectif d'appareil photo externe, et l'ensemble d'objectif d'appareil photo externe comprenant
un support d'objectif (21), muni d'un premier orifice étagé (211) et de plusieurs objectifs optiques qui entourent le premier orifice étagé (211) ;
un élément de positionnement pivotant, muni d'une première structure anti-détachement et d'une seconde structure anti-détachement respectivement aux deux extrémités, avec une partie de positionnement rotative au milieu, dans laquelle la partie de positionnement rotative est située dans le premier orifice étagé (211), la première structure anti-détachement et la seconde structure anti-détachement sont respectivement situées aux deux extrémités du premier orifice étagé (211), afin de limiter le support d'objectif (21) sur la partie de positionnement rotative, et la seconde structure anti-détachement est reliée au corps de logement ;
un premier élément élastique (22), prévu entre la première structure anti-détachement et un rebord du premier orifice étagé (211), avec une pression de rappel appliquée sur le support d'objectif (21) ; et
une première structure de positionnement, comprenant une première partie de positionnement et plusieurs premières parties de positionnement et d'adaptation, qui sont disposées sur le support d'objectif (21) et le corps de logement, ou sur le support d'objectif (21) et la seconde structure anti-détachement ; dans laquelle, lorsque, sous l'action d'une force externe, le support d'objectif (21) est adapté pour s'éloigner du corps de logement dans la direction axiale de l'élément de positionnement pivotant, de sorte que la première partie de positionnement soit détachée de la première partie de positionnement et d'adaptation correspondante contre la force élastique du premier élément élastique (22), et le support d'objectif (21) est adapté pour tourner par rapport au corps de logement sous la force externe, et lorsque le support de lentille (21) tourne jusqu'à un point auquel l'objectif optique sélectionné est aligné avec un orifice de position destiné à l'appareil photo intégré et la force externe disparaît, le support d'objectif (21) est adapté pour permettre à la première partie de positionnement d'être alignée avec et reliée à la première partie de positionnement et d'adaptation correspondante sous la force élastique du premier élément élastique (22), afin de limiter la rotation du support d'objectif (21) par rapport au corps de logement ;
l'ensemble d'objectif d'appareil photo externe est relié au corps de logement de manière détachable et **caractérisé en ce que**
le corps de logement est muni d'une glissière (122) avec ses deux côtés munis d'un rail de guidage ;
la seconde structure anti-détachement de l'élément de positionnement pivotant est adaptée pour pénétrer dans ou sortir de la glissière (122) par le biais d'une extrémité de celle-ci, et pour se déplacer le long du rail de guidage vers l'avant et vers l'arrière, et l'élément de positionnement pivotant est muni d'une rainure de montage dans la direction axiale ; et
une seconde structure de positionnement, prévue sur la seconde structure anti-détachement et la glissière (122), comprend un composant de positionnement élastique limité dans la rainure de montage, et au moins une seconde partie d'adaptation et de positionnement prévue au fond de la glissière (122), le composant de positionnement élastique comprend une seconde partie de positionnement et un second élément élastique, et, sous la force élastique du second élément élastique, la seconde partie de positionnement s'étend partiellement hors de la rainure de montage et s'adapte à la seconde partie d'adaptation et de positionnement correspondante, afin d'empêcher le mouvement de la seconde structure anti-détachement dans la glissière.

2. Coque de protection destinée à un téléphone mobile à objectif d'appareil photo externe détachable selon la revendication 1, **caractérisée en ce que** l'ensemble d'objectif d'appareil photo externe comprend en outre un protège-objectif (24), le protège-objectif (24) est muni d'un second orifice étagé (241) qui s'étend vers l'intérieur du protège-objectif (24) et est placé dans le premier orifice étagé (211) du support d'objectif (21) afin d'empêcher son détachement et de limiter sa position, la partie de positionnement rotative est située dans le second orifice étagé (241), le premier élément élastique (22) est disposé entre la première structure anti-détachement et un rebord (211a) du second orifice étagé (241).

3. Coque de protection destinée à un téléphone mobile à objectif d'appareil photo externe détachable selon la revendication 1, **caractérisée en ce que** la première partie de positionnement est un renflement de positionnement (33), et la première partie de positionnement et d'adaptation est un orifice de positionnement adapté pour être placé avec le renflement de positionnement.

4. Coque de protection destinée à un téléphone mobile à objectif d'appareil photo externe détachable selon la revendication 1, **caractérisée en ce que** l'élément de positionnement pivotant comprend :
un coulisseau (3), qui forme la seconde structure anti-détachement, adaptée pour pénétrer dans ou sortir de la glissière (122) par le biais d'une extrémité de celle-ci et pour se déplacer le long du rail de guidage, et muni d'un orifice traversant de coulisseau (32) ;
un axe de support d'objectif (23), ayant un corps principal qui forme la partie de positionnement rotative, une première extrémité reliée de manière fixe au coulisseau (3) et munie d'un orifice aveugle (232) qui communique avec l'orifice traversant de coulisseau (32) afin de former la rainure de montage, et une seconde extrémité munie de la collerette (231) qui forme la première structure anti-détachement.

5. Coque de protection destinée à un téléphone mobile à objectif d'appareil photo externe détachable selon la revendication 4, **caractérisée en ce que** le second élément élastique est un ressort (35), la seconde partie de positionnement est un roulement à bille (34), et la seconde partie d'adaptation et de positionnement est une rainure de butée prévue au fond de la glissière (122).

6. Coque de protection destinée à un téléphone mobile à objectif d'appareil photo externe détachable selon la revendication 5, **caractérisée en ce qu'**elle comprend deux rainures de butée, comprenant une première rainure de butée (124) destinée à la limitation de position lorsque l'ensemble d'appareil photo externe se trouve dans une position de prise de vue et une seconde rainure de limitation (125) lorsque l'ensemble d'objectif d'appareil photo externe ne se trouve pas dans une position de prise de vue.

7. Coque de protection destinée à un téléphone mobile à objectif d'appareil photo externe détachable selon la revendication 4, **caractérisée en ce que** la première partie de positionnement est prévue sur le coulisseau (3), et la première partie de positionnement et d'adaptation est prévue sur le support d'objectif (21).

8. Coque de protection destinée à un téléphone mobile à objectif d'appareil photo externe détachable selon la revendication 4, **caractérisée en ce que** l'un du rail de guidage et du coulisseau (3) est muni d'un renflement de butée (31), et l'autre est muni d'une rainure (123) ayant une forme qui correspond à celle du renflement de butée (31), le coulisseau (3) est inséré dans la rainure (123) via le renflement de butée (31), et le renflement de butée (31) est adapté pour être relié au rail de guidage et pour se déplacer le long du rail de guidage.

9. Coque de protection destinée à un téléphone mobile à objectif d'appareil photo externe détachable selon la revendication 8, **caractérisée en ce que** le coulisseau (3) est en forme de bande avec les bords supérieurs et inférieurs munis u renflement de butée (31) ; la glissière (122) est en forme de bande avec les bords supérieurs et inférieurs munis de la rainure (123) ayant une forme qui correspond à celle du renflement de butée (31).

10. Coque de protection destinée à un téléphone mobile à objectif d'appareil photo externe détachable selon la revendication 1, **caractérisée en ce que** le corps de logement possède une structure hybride, comprenant du silicone de coque souple (11) adapté pour envelopper l'ossature du téléphone mobile et du silicone de coque dur (12) adapté pour positionner l'ensemble d'objectif d'appareil photo externe, le silicone de coque souple (11) est formé avec un premier orifice de position (111), le silicone de coque dur (12) est formé avec un second orifice de position (121), l'orifice de position de l'appareil photo intégré se compose du premier orifice de position (111) et du second orifice de position (121) qui se chevauchent, et la glissière (122) est formée sur le silicone de coque dur (12).

11. Coque de protection destinée à un téléphone mobile à objectif d'appareil photo externe détachable selon la revendication 10, **caractérisée en ce que** le silicone de coque souple (11), à un emplacement qui correspond à la glissière (122), est en outre muni d'un orifice en forme de bande (112) en communication avec le premier orifice de position (111).

12. Coque de protection destinée à un téléphone mobile à objectif d'appareil photo externe détachable selon la revendication 10, **caractérisée en ce que** le silicone de coque souple (11) est relié au silicone de coque dur (12) via un positionnement par adhérence.

13. Coque de protection destinée à un téléphone mobile à objectif d'appareil photo externe détachable selon l'une quelconque des revendications 1 à 12, **caractérisée en ce que** le corps de logement possède une structure intégrale.

14. Coque de protection destinée à un téléphone mobile à objectif d'appareil photo externe détachable selon la revendication 4, **caractérisée en ce que** le coulisseau (3) est muni d'un siège d'axe, et l'axe de support d'objectif (23) est placé dans une rainure de siège du siège d'axe en vue d'une limitation de position.

15. Coque de protection destinée à un téléphone mobile à objectif d'appareil photo externe détachable selon la revendication 14, **caractérisée en ce que** la rainure de siège du siège d'axe est circulaire et est munie d'une face de positionnement plane le long de l'axe de la rainure de siège ; l'axe de support d'objectif (23) est muni, dans la direction axiale, d'une face d'étage de positionnement qui correspond parfaitement à la face de positionnement plane dans la rainure de siège.
